Europäisches Patentamt

European Patent Office

Office européen des brevets

(11) Publication number: **0 238 762**

**A1**

(12) **EUROPEAN PATENT APPLICATION**

(21) Application number: **86401672.0**

(51) Int. Cl.⁴: **G01K 11/06**

(22) Date of filing: **28.07.86**

(30) Priority: **20.02.86 ES 292415 U**

(43) Date of publication of application:
**30.09.87 Bulletin 87/40**

(84) Designated Contracting States:
**DE FR GB IT**

(71) Applicant: **Cabrero Cabrera, Santiago**
**Avda Miraflores 14**
**Madrid(ES)**

(72) Inventor: **Cabrero Cabrera, Santiago**
**Avda Miraflores 14**
**Madrid(ES)**

(74) Representative: **Loriot, Jacques et al**
**c/o SA. FEDIT-LORIOT 38, avenue Hoche**
**F-75008 Paris(FR)**

(54) **Defrosting detection device.**

(57) The receptacle 1 of the defrosting detection device comprises three internal compartments 3-4-5 of increasing diameters, the communication between compartments 3 and 4 being closed by a plug 8 which is displaced out of its sealing position upon freezing of a colored fluid contained in compartment 3.

In case of defrosting, the fluid in a liquid state flows from compartment 3 to compartment 5.

FIG-I

EP 0 238 762 A1

## DEFROSTING DETECTION DEVICE

### SUMMARY OF THE INVENTION

The present invention consists of a defrosting detection device, that makes it possible to determine with the naked eye if the product subjected to a commercial freezing process, has undergone any changes or on the contrary if it is in perfect condition for consumption.

### BACKGROUND OF THE INVENTION

At the present time defrosting detection devices basically consist of a transparent receptacle properly fastened to the container of the product to be frozen. Inside the receptacle there is a fluid that may or may not have a color, which is liable to make up a solid volume by means of freezing or to stay in a liquid state when at any time it has not been exposed to the aforementioned freezing. The fluid in a liquid state will no longer be able to take on the same previous geometric shape, though the product is put back in the same or another freezing process.

These known devices have two variations that are marketed; the first one of them in which the fluid in a solid state already frozen inside its receptacle is put in the container of the product right when the freezing process begins, while in the second variation known,the fluid in a liquid state is inside a second capsule located inside the receptacle, in such a way that said fluid in a liquid state attains its condition of a solid volume, at the beginning of the freezing process itself of the product, while upon increasing the volume, the block of ice produces the breaking of the second capsule that wrapped it up hermetically.

In the first of the variations, the additional operations that must be carried out in order to obtain the freezing of the fluid and in the second of the variations the procedures to encapsulate the liquid, bring about some high manufacturing costs that practically make their marketing impossible.

### OBJECT OF THE INVENTION

The object of the present invention consists of a defrosting detection device that eliminates the two problems pointed out above, in other words, without prior freezing of the fluid and without any hermetic encapsulating procedure in an additional capsule.

The device that is the object of the invention basically consists of a receptacle made out of transparent material, that has inside of it a chamber with three different diameters, marking up three stepped chambers.

The chamber with the smallest diameter consists of the compartment for the fluid in a solid state, while the step between this compartment and the central one, is formed in its shape in order to receive a plug or stopper. When the freezing takes place and upon the increasing of the volume the fluid produces this displacement of the plug, that will fall into the third compartment with a bigger diameter and with hardly any height. The frozen fluid will remain in the first compartment, until an unforeseen defrosting of the product takes place, at which time the fluid will return to its liquid state, filling up the third compartment, which will be able to be impregnated with a suitable pigmentation and which the fluid is provided with. The presence of this tinge in the third compartment, will reveal to the consumer that the product has not had a perfect freezing process in the freezer.

The first compartment will have an opaque coating on its side and bottom walls, so that the colored liquid may not be seen from the outside, when the fluid in a solid state is located in the aforementioned first compartment.

### BRIEF DESCRIPTION OF THE DRAWINGS

In order to complete the description, a sheet of drawings is appended to the present specification :

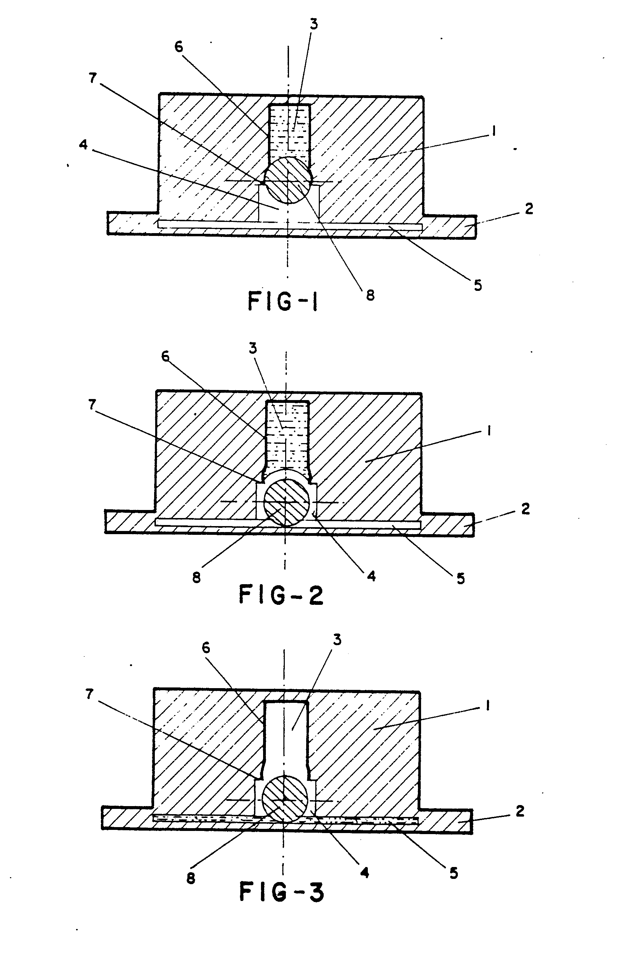

-Figure 1 corresponds to a diametral sectional view of the receptacle, with the fluid in a liquid state in the first compartment, that is also plugged up by the corresponding plug.

-Figure 2 represents another diametral sectional view of the receptacle with the fluid in a solid state, its volume has increased, the first compartment has been unplugged and the plug has been displaced to the third compartment.

-Figure 3 corresponds to another diametral sectional view of the receptacle with the fluid filling up the third compartment.

### DETAILED DESCRIPTION OF THE INVENTION

The defrosting detection device which is the object of the present invention, consists of a receptacle (1) made out of a transparent material and provided with a fin (2) for its fastening to the container of the product. The receptacle (1) has inside it a chamber hermetically sealed and divided into three stepped compartments each one, (3) (4) and (5) with a different diameter.

The first compartment (3) with a smaller diameter has an opaque coating (6) on its wall and bottom and it contains the fluid in a liquid state, upon plugging up the step (7) by means of a plug (8).

Upon producing the freezing and the fluid going into a solid state, the increase of the volume causes the plug (8) to be displaced, while the duly colored fluid and in its solid state remains in compartment (3). The fluid cannot be observed from the outside due to the opaque coating (6).

In this situation the fluid will have to remain until the frozen product reaches the consumer, with which he will have the guarantee that the freezing process has not undergone any change.

On the contrary, if during the freezing process, the product were to have defrosted, the fluid in a solid state would turn into a liquid state, with which the liquid would go from compartment (3) to compartment (5) coloring its walls, which would indicate that the freezing process has undergone some change. Although the product were put back in the freezing process, the fluid would never recover the same location or the same solid state and the pigmentation of the compartment (5) would never disappear either. The walls of compartment (5) could optionnally consist of an absorbent material, that collaborates in the pigmentation of this compartment (5).

Preferably, the plug (8) is in the form of a ball.

The plug (8) could be loose inside the chamber or it could be fastened to the bottom of the compartment (3) by means of a spring that helps to overcome the atmospheric pressure of the compartment (4), when the increase of volume of the fluid is produced upon freezing.

## Claims

1. A defrosting detection device, of the type that is made up of a receptacle (1) made out of a transparent material fastened to the container of the product and that also have in its inside a colored fluid that upon freezing undergoes an increase of its volume, characterized by the facts that : the receptacle has inside it a chamber divided into three stepped compartments (3, 4, 5), with different diameters, the inside compartment (3) has the smallest diameter; the wall and bottom of said inside compartment are coated with an opaque material (6); a plug (8) is positioned in a step (7) between the center compartment (4) and the inside compartment (3), in order to plug up the colored fluid in a liquid state contained in said inside compartment, whose fluid upon the producing of freezing and upon going into a solid state, thus increasing the volume, will cause the plug to displace towards the outside compartment (5) with a bigger diameter.

2. A defrosting detection device according to claim 1, characterized in that the plug (8) is in the form of a ball.

3. A defrosting detection device according to claim 1 or 2, characterized in that the walls of the outside compartment (5) are at least partially made of an absorbent material.

FIG-1

FIG-2

FIG-3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 119 511  (L. BOLLA)<br>* Page 1, lines 109-129; figure 5 *<br><br>--- | 1 | G 01 K  11/06 |
| Y | FR-A-2 250 431  (HUGHES)<br>*  Page 2, line 14 - page 3, line 30; figures *<br><br>--- | 1,3 | |
| Y | DE-A-3 331 544  (STEPHAN EBERHART)<br>* Page 14, last paragraph - page 15, paragraph 1; figure 1 *<br><br>----- | 1,3 | |

TECHNICAL FIELDS
SEARCHED (Int. Cl.4)

G 01 K

The present search report has been drawn up for all claims

| Place of search | Date of completion of the search | Examiner |
|---|---|---|
| THE HAGUE | 02-07-1987 | RAMBOER P. |